# EUROPEAN PATENT APPLICATION

(11) **EP 4 521 527 A1**
(43) Date of publication of application: **12.03.2025**
(21) Application number: 24198394.9
(22) Date of filing: 04.09.2024
(51) Int. Cl.: H01M 50/229, H01M 50/231, H01M 50/233, H01M 50/204, H01M 50/22, H01M 10/613, H01M 10/625, H01M 10/6556

(54) **CONTAINER PROVIDED WITH AT LEAST ONE MULTI-LAYERED WALL, IN PARTICULAR FOR HOUSING BATTERY CELLS**

(30) Priority: 07.09.2023 IT 202300018351
(71) Applicant: FERRARI S.p.A., 41100 Modena (IT)
(72) Inventor: BARRESI, Enzo, 41100 MODENA (IT)
(74) Representative: Studio Torta S.p.A.

(57) **Abstract**

A container (20), in particular for housing battery cells (21), includes at least one multi-layered wall (1a) having two faces (4,5) parallel to and opposite one another and defined by respective layers (2,3) arranged on opposite sides of a core (6a), which comprises at least one portion defined by a gyroid structure (11a) so as to channel a heat exchange fluid from an inlet mouth (33) to an outlet mouth (34) .

## Description

### CROSS-REFERENCE TO RELATED APPLICATIONS

This patent application claims priority from Italian patent application no. 102023000018351 filed on September 7, 2023, the entire disclosure of which is incorporated herein by reference.

### TECHNICAL FIELD

The invention relates to a container provided with at least one multi-layered wall, in particular for housing battery cells.

### PRIOR ART

As it is known, in electric or hybrid vehicles with battery packs, the latter consist of a plurality of storage modules, arranged in positions close to one another. Each one of the modules includes, in turn, a plurality of battery cells, wrapped in sheet steel or sheet aluminium, thus defining a sort of container. The poles of these cells are then connected to one another to generate the electrical voltage for which the module was designed.

The set of modules is usually accommodated in a housing structure, which can be provided with devices for physically separating each module from the adjacent ones, so as to ensure that any fire in one of these modules does not lead to a chain degeneration or does not compromise the integrity of the outer walls of the housing structure.

Furthermore, the battery modules are cooled by having a heat exchange liquid flow in the walls of the housing structure and/or in the containers housing the battery cells.

For this purpose, for example, the walls of such containers have two aluminium plates arranged in positions facing one another so as to form a gap, which enables the passage of the heat exchange liquid for cooling. In particular, these plates are coupled to one another by friction welding them together with a "U"-shaped projection (previously obtained through cold moulding). In the area of an edge of its, the wall thus formed has an inlet and an outlet, which are connected to a radiator, for cooling the heat exchange liquid.

Known solutions need to be improved in order to obtain walls that are lighter and, at the same time, maintain a high degree of resistance to mechanical and thermal stresses. It is also advisable that the heat exchange is efficient and that the walls of the container for housing the battery cells can be manufactured in a relatively simple manner.

The object of the invention is to fulfil the needs discussed above, preferably in a simple and/or effective and/or economic fashion.

### SUMMARY OF THE INVENTION

The aforesaid object is reached by a container as defined in claim 1.

Furthermore, the dependent claims define special embodiments of the invention.

### BRIEF DESCRIPTION OF THE DRAWINGS

The invention will be best understood upon perusal of the following description of preferred embodiments, which is provided by mere way of non-limiting example and with reference to the accompanying drawings, wherein:
- figure 1 is a schematic and partial perspective view of a multi-layered wall for forming a preferred embodiment of the container according to the invention;
- figure 2 shows, in a simplified manner, a detail of a core of the wall of figure 1;
- figure 3 schematically shows a variant of the wall of figure 1, applied to form a preferred embodiment of the container according to the invention, in particular a container for battery cells; and
- figure 4 shows, in a simplified manner, a step of a manufacturing process for forming the container of figure 3.

### DETAILED DESCRIPTION OF PREFERRED EMBODIMENTS OF THE

### INVENTION

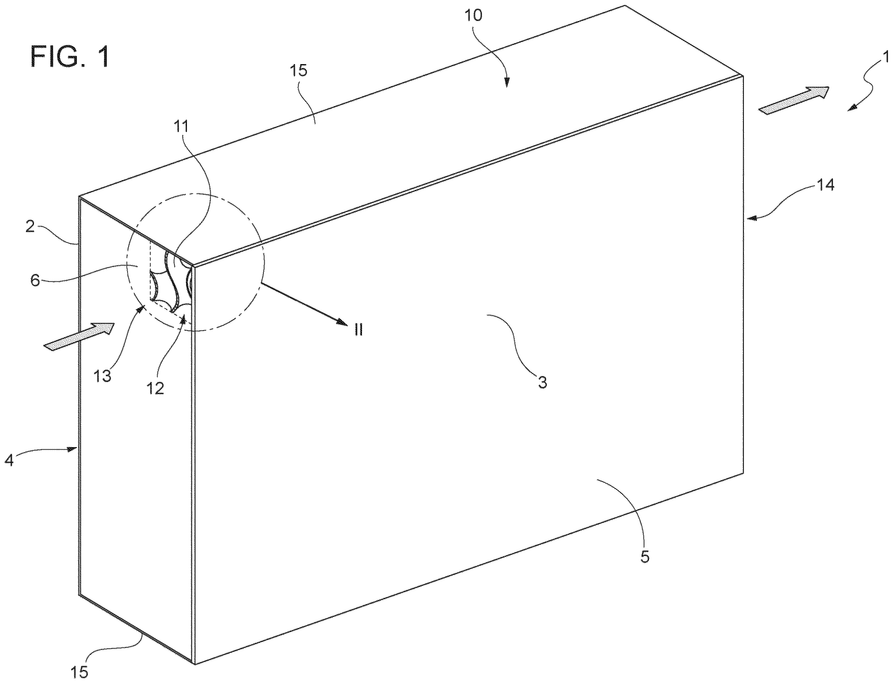

In figure 1, reference number 1 indicates, as a whole, a multi-layered wall (partially and schematically shown), comprising at least three layers, two of them being indicated by reference numbers 2 and 3 and defining respective outer faces 4 and 5, parallel to and opposite one another, whereas the other layer is defined by a core 6, arranged between the layers 2 and 3 parallel to them. In other words, the wall 1 defines a sandwich panel. Preferably, the core 6 has a constant thickness (measured in a direction orthogonal to the faces 4 and 5) and substantially has the same extension as the layers 2 and 3 in width and length.

Preferably, the wall 1 has no other layers besides the layers 2 and 3 and the core 6 (however excluding from this count any glue that could be provided for fixing the layers 2 and 3 to the core 6). The wall 1 is normally also referred to as "laminate" or as a "laminated element" (even though it is not manufactured through lamination), as the layers 2, 3 and the core have a relatively small thickness compared to the other two dimensions, length and width.

Preferably, the thickness of the core 6 is greater than 6 mm, whereas the thickness of the layers 2 and 3 is less than 2 mm.

The wall 1 has a peripheral edge or surface 10, which corresponds to the peripheral edge of the layers 2, 3 and of the core 6 and, in the example shown herein, consists of four side faces: in other words, the edge of the layers 2, 3 and of the core 6 has a rectangular shape.

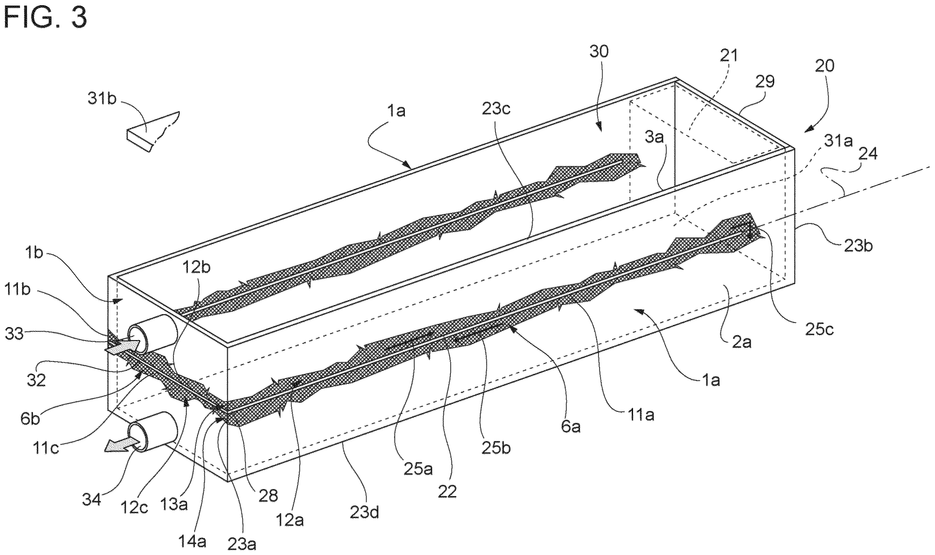

The wall 1 can advantageously be used for manufacturing containers for battery cells (indicated by reference number 21 in figure 3), so as to form battery modules and/or battery packs for motor vehicles and motorcycles. However, the technical teaches disclosed hereinafter apply not only to the automotive industry and to transports, but also to any application that needs to store power and/or needs to cool an object accommodated in a container.

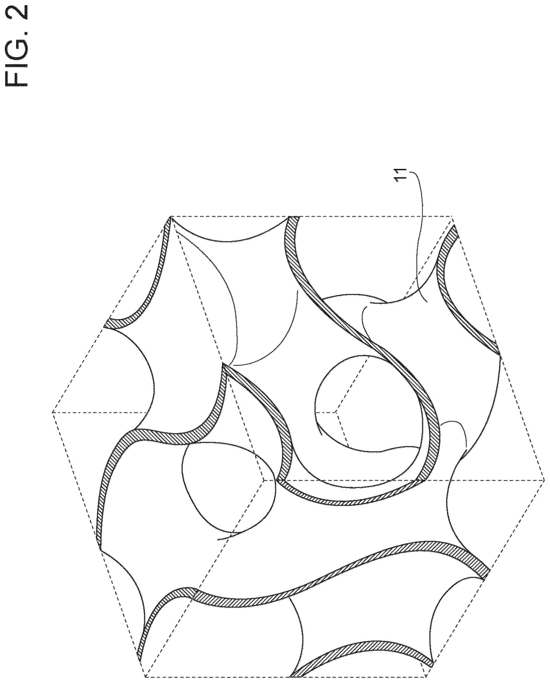

According to the invention, the core 6 comprises at least one portion defined by a gyroid structure 11, an example thereof being shown in figure 2 in a simplified manner.

Gyroid structures are cell structures that have a three-dimensional geometry, defined by two-dimensional wavy lines that intersect one another and create a relatively strong and robust structure, characterized by a very large surface area and cross sections reduced to a minimum. In particular, the gyroid structures show high values of resistance to shear, bending and compression forces in all directions. By way of example, reference can be made to the text available at the internet link https://www.sciencedirect.com/science/article/pii/S02641275 19300176#s0055 (Materials & Design, Volume 165, 5 March 2019, 107597, "Mechanical properties of 3D printed polymeric Gyroid cellular structures: Experimental and finite element study")

Given the complexity of the shape of gyroid structures, these are usually manufactured by means of additive manufacturing techniques.

In this case, the gyroid structure 11 is manufactured through the technique called FFM, "Fused Filament Fabrication", which is sometimes also referred to as FDM, "Fused deposition modeling". In this manufacturing technology, a thermoplastic material is dispensed by means of an extrusion nozzle, with which it is possible to manage the flow of the material so as to obtain additive manufacturing.

In this case, the material of the gyroid structure 11 preferably is PA6 (polyamide-6) reinforced by fibres, in particular aramid fibres (for example Kevlar).

Compared to other types of cell structures (for instance, honeycomb structures), gyroid structures have cells that are so-called "open" and therefore communicate with one another.

In the container according to the invention, the inner spaces defined by the pores or cells of the gyroid structure 11 are used as a channel 12 for conveying a heat exchange fluid, in particular a liquid.

Furthermore, given the same resistance to shear, bending and compression stresses and the same dimensions of the core 6, when compared to honeycomb structures, the gyroid structure uses a smaller amount of material, namely it consists of partitions/ribs with a smaller thickness. Therefore, it is lighter: for example, the weight of the gyroid structure 11 can be about 80%, or even less, relative to the weight of a honeycomb structure.

This reduction in material and weight also positively leads to saving production times, considering applying the same additive manufacturing technique for manufacturing the gyroid structure and the comparison honeycomb structure.

Moreover, as mentioned above, the ratio between the inner surface area of the material forming the inner cells and the total volume of said material is extremely high, for example equal to about 670 m² of surface for each cubic meter of volume of material.

Thanks to these high values, the use of the core 6 as a heat exchanger is extremely effective, with high heat dissipation capacities. In the channel 12, both air and a liquid can be used as heat exchange fluid.

To sum up, the gyroid structure 11 allows structural characteristics of resistance, lightness characteristics as well as very advantageous heat exchange characteristics to be combined together.

Therefore, the wall 1 can advantageously be used to dissipate the excess heat from the battery packs, with extremely small weights.

In figure 1, in order to convey the heat exchange fluid and, hence, generate a flow that extracts heat from the wall 1, the channel 12 has an inlet 13 and an outlet 14, which are obtained in the area of the core 6, along the peripheral surface 10 of the wall 1. In the schematic example of figure 1, the inlet 13 and the outlet 14 are obtained on opposite sides, but, in general, they simply need to be spaced apart and separated from one another.

With the exception of the inlet 13 and the outlet 14, the channel 12 is closed in a fluid-tight manner along the entire rest of the peripheral surface 10, for example by means of a coating 15 fixed on the side edge of the core 6 (or by means of a solid portion of the core 6, defining the side edge thereof).

For example, the coating 15 can be defined by a flap of the layer 2 or 3, folded onto the side edge of the core 6, namely along a side of the peripheral surface 10.

As to the layers 2 and 3 that define the outside of the wall 1, the layer 2 is preferably defined by a sheet made of a composite material, comprising carbon fibres, and the layer 3 is defined by an aluminium plate or sheet aluminium.

Figure 3 shows a container 20, in particular for housing battery cells 21 (one of them being schematically shown with a broken line), according to a preferred embodiment of the invention.

In particular, the container 20 comprises a wall 1a defining a variant of the wall 1 of figure 1. For the wall 1a, the same reference numbers as the ones of the wall 1 of figure 1 were used, where possible, followed by the reference letter "a". The wall 1a differs from the wall 1 in that it has at least one solid portion 22, in the core 6a, in addition to the gyroid structure 11a.

The term "solid portion" means a portion of material that lacks inner channels and that is distinct from the gyroid structure, even if it is integral to the latter.

The solid portion 22 departs from a side 23a of the peripheral edge of the core 6, and extends along a longitudinal axis 24, transverse to the side 23a, towards an opposite side 23b, remaining spaced from the other two sides 23c and 23d of the peripheral edge. The solid portion 22 only extends along part of the length of the wall 1a, namely it ends before the edge 23b. Therefore, the channel 12a, which is formed by the cells of the gyroid structure 11a, extends like a U around the solid portion 22. In other words, the channel 12a comprises two segments 25a and 25b, which are parallel to the axis 24 and are joined to one another by a transverse segment 25c, which extends along the side 23b.

In this way, the heat exchange fluid flows in and out through an inlet 13a and an outlet 14a, respectively, which are both arranged in the area of the side 23a and are separated from one another by an end 28 of the solid portion 22.

At the same time, along the side 23b of the core 6a, the segment 25c of the channel 12a is preferably sealed in a fluid-tight manner (by means of a transverse solid portion, which can be part of the core 6a, of a coating on the side 23b or of a rear wall 29 of the container 20), so as to convey the heat exchange fluid crosswise, from the segment 25a towards the segment 25b.

The layer 3a of the wall 1a is made of metal, for example aluminium, and faces the inside of the container 20, namely it faces a housing 30 accommodating the battery cells 21, in order to have a high heat exchange between the housing 30 and the channel 12a where the heat exchange fluid flows.

On the opposite side, the container 20 comprises another wall 1a, facing and symmetrical to the one described above.

At the front, namely in a position opposite the rear wall 29, the container 20 comprises a wall 1b, which is also manufactured in a manner similar to the walls 1 and 1a described above.

The container 20 further comprises a base wall 31a, from which the walls 1a, 1b and 29 project.

The container 20 is provided with a lid 31b (partially shown), opposite the base wall 31a, for closing the housing 30 at the top (preferably, the lid 31b can also be manufactured as a sandwich wall with a core defined by a gyroid structure, for reasons of lightness).

The core 6b of the wall 1b has a solid portion 32, which is arranged in an intermediate position, as an extension of the solid portion 22 of the wall 1a, and separates two gyroid structures 11b and 11c in a fluid-tight manner. The cells or pores of the gyroid structures 11b and 11c define respective channels 12b and 12c, which are parallel to one another and communicate with the inlets 13a and with the outlets 14a, respectively, of the two walls 1a, so as to convey the heat exchange fluid to/from said walls 1a.

The wall 1b further comprises two fittings 33 and 34 defining an inlet mouth and an outlet mouth, respectively, which communicate with the channels 12b and 12c, respectively. The fittings 33 and 34 are preferably defined by solid portions, which are manufactured as one single piece together with the core 6b (and, therefore, are manufactured together with the core 6b through additive manufacturing).

In use, the fittings 33 and 34 are connected to a heat exchanger, not shown, for example to a radiator, which disposes of the heat transferred to the heat exchange fluid. The latter, basically enters through the fitting 33, flows in the channel 12b defined by the cells of the gyroid structure 11b to be deflected towards the inlets 13a of the two walls 1a, flows in the channels 12a, preferably following a U-shaped path, passes from the walls 1a to the channel 12c through the outlets 14a and finally exits the channel 12c through the fitting 34 in order to be conveyed towards the aforementioned heat exchanger.

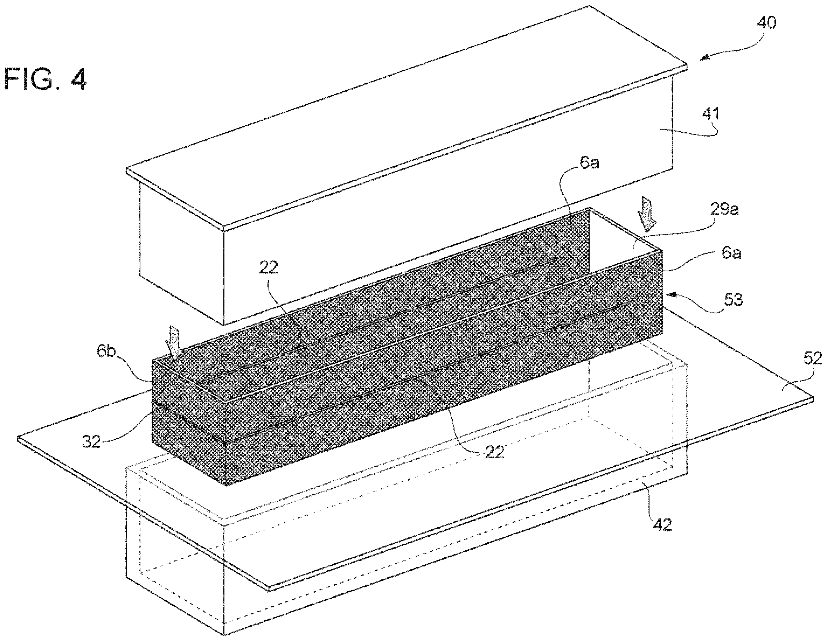

Preferably, the rear wall 29 and the base wall 31a are also defined by sandwich or multi-layered walls, substantially like the walls 1a and 1b (in order to guarantee the same lightness characteristics along all the walls of the container 20), but with the cells of their gyroid structure that are isolated in a fluid-tight manner with respect to the channels 12a, 12b, 12c described above. In other words, the gyroid structure provided in the core of the rear wall 29 (indicated by 29a in figure 4) and in the core of the base wall 31a is used only to make the container 20 light and resistant and not to convey a heat exchange fluid. However, the cells or pores of the gyroid structure of the walls 31a and 29 can possibly be used to also define one or more channels for the passage of the heat exchange fluid, communicating with the fittings 33,34.

Figure 4 shows, by way of non-limiting example, a possible way of manufacturing the set of walls 1a, 1b, 29, 31a of the container 20 by means of a schematically illustrated mould 40 comprising a male element 41 and a female element 42, which is shaped so as to define a cavity complementary to the outer shape of the walls 1a, 1b, 29, 31a of the container 20.

At first, the inner surface of the female element 42 is coated by means of one or more sheets 52, made as carbon fibre pre-pregs. If necessary, the edges can be reinforced by locally placing several sheets on top of one another. At the end of the moulding, these sheets will form the outer layers (2a) of all the walls of the container 20. After having internally coated the female element 42, a body 53 is inserted, which was previously manufactured by means of additive manufacturing techniques (for example, FDM) and is defined by the set of cores (6a, 6b, 29a, etc.) of the walls 1a, 1b, 29, 31a of the container 20.

If the body 53 is already provided with the fittings 33 and 34 described above, the corresponding walls of the female element 42 can be provided with movable blocks (not shown) to ensure the space needed to accommodate said fittings 33,34 and, therefore, not to create difficulties in the insertion of the body 53 (and in the subsequent extraction of the finished piece).

Subsequently, the mould 40 is closed by means of the male element 41 and then the whole undergoes a curing step, under vacuum and through heating, in order to consolidate the resin defining the matrix of the sheets 52 and then form the layer 2a of the walls 1a, 1b, 29, 31a and, at the same time, join the layer 2a to the core of the walls 1a, 1b, etc. by means of the aforesaid resin.

As to the metal inner layer 3a of the walls 1a, 1b, 29, 31a, sheet aluminium or aluminium plates are applied, after the curing step, on an inner surface of the body 53, preferably through gluing, for example with the use of a two-component structural adhesive and, subsequently, the mould 40 is closed again by means of the male element 41 (a block thereof, not shown, being removed with respect to the first closing in order to compensate for the thickness of the applied sheets or plates) and then the whole is subject to a curing step, under vacuum and through heating, to consolidate the adhesive.

Owing to the above, it is evident that the use of a gyroid structure allows manufacturers to obtain a container with walls of the sandwich type, which have a high resistance, a high rigidity and convey a heat exchange fluid, as described above in detail, with a heat exchange that proves to be extremely efficient.

Furthermore, the procedure for manufacturing and/or assembling the container can be chosen so as to be relatively simple and adaptable to different sizes.

Finally, owing to the above, it is evident that the container 20 disclosed above with reference to the accompanying drawings can be subject to changes and variations, which do not go beyond the scope of protection of the invention, as set forth in the appended claims.

In particular, the dimensions and proportions of the container 20 could be different from the ones discussed herein, as already mentioned above.

In addition, the position, the shape and the fixing system of the fittings 33 and 34 could be different from the ones indicated above by way of example.

Furthermore, the walls could be provided with valves or through holes, instead of being continuous, for example in order to let possible gases emitted by the battery cells 21 in the housing 30 vent outwards.

Finally, the path of the heat exchange fluid, namely the path of the channels 12, 12a, 12b, 12c defined by the cells or pores of the gyroid structure, could be different from the one shown by way of example.

## Claims

1. A container (20) comprising:
- a front wall (1b) and a rear wall (29), opposite one another;
- two side walls (1a), opposite one another;
- a base wall (31a), from which said front wall (1b), side walls (1a) and rear wall (29) project, so as to define a housing (30), in particular for housing battery cells (21) ;
- a lid (31b), opposite said base wall (31a), for closing said housing (30) at the top;
- two fittings (33,34) defining an inlet mouth and an outlet mouth, respectively, for a heat exchange fluid;
**characterized in that** at least one of said front, side, base and rear walls (1b,1a,31a,29) is defined by a multi-layered wall (1), which has two faces (4,5), parallel to and opposite one another, and a peripheral edge; one of said faces delimiting said housing (30) and the other one of said faces facing outwards;
wherein said multi-layered wall comprises two layers (2,3) defining said faces (4,5), respectively, and a core (6a) between said layers (2,3);
wherein said core (6a) comprises at least one portion defined by a gyroid structure (11a);
wherein the core (6a) of said multi-layered wall has an inlet (13a) and an outlet (14a), arranged in positions spaced apart from one another along said peripheral edge (10) and communicating with said inlet mouth and with said outlet mouth, respectively;
and wherein said gyroid structure (11a) has a plurality of open cells, which form, together, a channel (12a) communicating with said inlet (13a) and said outlet (14a) for conveying the heat exchange fluid from said inlet mouth to said outlet mouth through the gyroid structure (11a) of said multi-layered wall.

2. The container according to claim 1, wherein said core (6a) comprises at least one solid portion (22), which is distinct from said gyroid structure (11a) and delimits at least one segment (25a,25b) of said channel (12a).

3. The container according to claim 2, wherein said solid portion (22) extends starting from a side (23a) of said peripheral edge and along a longitudinal axis (24), which is transverse to said side (23a).

4. The container according to claim 3, wherein said gyroid structure and, hence, said channel extend with a U-shape around said solid portion (22).

5. The container according to claim 4, wherein said solid portion (22) comprises an end (28), which separates said inlet (13a) and said outlet (14a) from one another.

6. The container according to claim 5, wherein each one of said front wall (1b) and side walls (1a) is defined by a multi-layered wall; wherein said front wall (1b) comprises a front wall core (6b) having a first and a second gyroid structure (11b,11c) and a front wall solid portion (32), which separates the first and second gyroid structure (11b,11c) in a fluid-tight manner; and wherein each one of said side walls (1a) comprises a respective inlet (13a), a respective outlet (14a) and a respective solid portion (22), which separates said inlet (13a) and said outlet (14a) from one another.

7. The container according to claim 6, wherein the front wall solid portion (32) is arranged so as to extend from solid portions (22) of the side walls (1a); and wherein the first and second gyroid structure (11b, 11c) of the front wall (1b) have cells defining a first and a second channel (12b, 12c), respectively, which are parallel to one another and communicate with the inlets (13a) and with the outlets (14a), respectively, of the side walls (1a) .

8. The container according to claim 7, wherein said front wall (1b) comprises said fittings (33, 34), and said inlet mouth and outlet mouth communicate with said first and second channel (12b, 12c), respectively.

9. The container according to any one of the preceding claims, wherein the material of said gyroid structure comprises a polymer loaded with reinforcement fibres.

10. The container according to any one of the preceding claims, wherein one of said layers is sheet aluminium or an aluminium plate.

11. The container according to any one of the preceding claims, wherein one of said layers is a sheet made of a composite material comprising carbon fibres.

12. A battery module comprising a plurality of battery cells (21) and a container (20), which houses said battery cells (21) and is defined according to any one of the preceding claims.
